# EUROPEAN PATENT APPLICATION

(11) **EP 4 037 164 A1**
(43) Date of publication of application: **03.08.2022**
(21) Application number: 20868049.6
(22) Date of filing: 26.08.2020
(51) Int. Cl.: H02K 11/20, G01M 13/04, G01M 99/00, H02K 1/14, H02K 5/173, H02K 15/02

(54) **ROTARY ELECTRIC MACHINE AND DIAGNOSTIC DEVICE**

(30) Priority: 27.09.2019 JP 2019177918; 18.02.2020 JP 2020024970
(71) Applicant: Nidec Corporation, Minami-ku, Kyoto-shi, Kyoto 601-8205 (JP)
(72) Inventor: NODA, Shinichi, Kyoto-shi, Kyoto 601-8205 (JP)
(74) Representative: Viering, Jentschura & Partner mbB Patent- und Rechtsanwälte
(86) International application number: PCT/JP2020/032222
(87) International publication number: WO 2021/059838

(57) **Abstract**

One aspect of a rotary electric machine includes: a bearing that holds a rotation shaft and is capable of rotating the rotation shaft; a housing in which the bearing is incorporated; a rotor that is fixed to the rotation shaft and rotates; and a stator that is fixed to the housing. The stator includes: a stator core having a tooth portion protruding toward the rotor and extending along the rotation shaft; a winding wound around the stator core; and a plurality of magnetic detection elements attached to an end portion of the stator core in a direction in which the rotation shaft extends while being separated from each other in a rotation direction of the rotation shaft.

## Description

### Technical Field

The present invention relates to a rotary electric machine and a diagnosis device.

### Background Art

Conventionally, a motor that converts electric energy into rotational energy and a generator that converts rotational energy into electric energy (hereinafter, these are collectively referred to as a rotary electric machine) are known. In a rotary electric machine, a rotation shaft is supported by a bearing to maintain a rotatable state. However, if the bearing is damaged, even if the damage is small, the damage may be enlarged thereafter, leading to a failure of the rotary electric machine. Therefore, a technique for detecting damage to the bearing is also known.

For example, Patent Literature 1 proposes a technique of calculating a representative value of vibration data of a bearing when the vibration data of the bearing measured by an acceleration pickup is given, reading a corresponding diagnosis threshold from a database on the basis of bearing model data and rotational speed information acquired from a PLC, and comparing the representative value with the diagnosis threshold to diagnose abnormality of the bearing.

### Citations List

### Patent Literature

Patent Literature 1: JP 2007-10415 A

### Summary of Invention

### Technical Problem

In a conventional technique for detecting damage to a bearing, vibration or the like due to damage to the bearing is detected, but as damage to the bearing, wear is also an important damage leading to failure of the rotary electric machine. The wear of the bearing is generally measured for a rotary electric machine in a stopped state or a test drive state.

However, for example, in an industrial rotary electric machine, since continuous operation is required for productivity and the like, a technique capable of diagnosing wear of a bearing during normal operation is required.

Therefore, an object of the present invention is to provide a rotary electric machine and a diagnosis device capable of diagnosing bearing wear during normal operation. Solution to Problem

One aspect of a rotary electric machine according to the present invention includes: a bearing that holds a rotation shaft and is capable of rotating the rotation shaft; a housing in which the bearing is attached; a rotor that is fixed to the rotation shaft and rotates; and a stator that is fixed to the housing. The stator includes: a stator core having a tooth portion protruding toward the rotor and extending along the rotation shaft; a winding wound around the stator core; and a plurality of magnetic detection elements attached to an end portion of the stator core in a direction in which the rotation shaft extends while being separated from each other in a rotation direction of the rotation shaft.

Further, one aspect of a diagnosis device according to the present invention includes: a signal acquisition unit that acquires a magnetic signal obtained by each of a plurality of magnetic detection elements attached to an end of a stator core included in a rotary electric machine in a direction in which a rotation shaft of the rotary electric machine extends while being separated from each other; and a first diagnosis unit that diagnoses eccentricity in the rotation shaft by comparing magnetic field intensities indicated by the magnetic signals acquired by the signal acquisition unit.

### Advantageous Effects of Invention

According to a rotary electric machine and a diagnosis device of the present invention, bearing wear can be diagnosed during normal operation.

### Brief Description of Drawings

Fig. 1 is a horizontal cross-sectional view schematically illustrating a configuration of a motor according to an embodiment.
Fig. 2 is a vertical cross-sectional view schematically illustrating the configuration of the motor according to the present embodiment.
Fig. 3 is a diagram schematically illustrating a structure of a stator.
Fig. 4 is a diagram schematically illustrating a structure of a bearing.
Fig. 5 is a diagram schematically illustrating a state in which wear occurs in a bearing.
Fig. 6 is a diagram illustrating arrangement positions of Hall sensors with respect to the stator.
Fig. 7 is a diagram schematically illustrating arrangement positions of the Hall sensors in the rotation direction of a rotor.
Fig. 8 is a diagram illustrating a modification of the arrangement of the Hall sensors.
Fig. 9 is a diagram illustrating another modification of the arrangement of the Hall sensors.
Fig. 10 is a diagram illustrating still another modification of the arrangement of the Hall sensors.
Fig. 11 is a functional block diagram illustrating a diagnostic system that diagnoses bearing wear.
Fig. 12 is a diagram illustrating an example of a magnetic signal.
Fig. 13 is an enlarged view of a part of the magnetic signal.
Fig. 14 is a diagram illustrating a waveform of a magnetic force obtained from the magnetic signal.
Fig. 15 is a diagram illustrating a relationship between the bearing wear and a difference in magnetic force.
Fig. 16 is a diagram illustrating a bearing in which wear as a premise of a creep phenomenon has occurred.
Fig. 17 is a diagram illustrating a generation principle of the creep phenomenon.
Fig. 18 is a diagram for explaining analysis of an fc signal.
Fig. 19 is a diagram illustrating an example of a result of frequency analysis.
Fig. 20 is a diagram illustrating a relationship between a frequency of the fc signal and the bearing wear.
Fig. 21 is a diagram illustrating an example of a phase difference between the fc signals.
Fig. 22 is a diagram schematically illustrating a detection unit in a modification.
Fig. 23 is a diagram illustrating a specific structure of a search coil.
Fig. 24 is a diagram schematically illustrating an arrangement position of a search coil group in the rotation direction of the rotor.
Fig. 25 is a diagram illustrating a modification including a comb-shaped member in which the search coil is incorporated.
Fig. 26 is a diagram illustrating the structure of the comb-shaped member.
Fig. 27 is a diagram illustrating an insertion location of a wedge portion.
Fig. 28 is a diagram illustrating a back surface of the comb-shaped member.
Fig. 29 is a diagram illustrating another example of the comb-shaped member.
Fig. 30 is a diagram illustrating still another example of the comb-shaped member.
Fig. 31 is a graph illustrating a relationship between a size of the search coil and a difference in magnetic force in the example illustrated in Fig. 26.
Fig. 32 is a diagram illustrating search coils having different lengths Lc.
Fig. 33 is a graph illustrating a relationship between a size of the search coil and a difference in magnetic force in the example illustrated in Fig. 29.
Fig. 34 is a diagram illustrating search coils having different spreads Wc.

### Description of Embodiments

Hereinafter, embodiments of a rotary electric machine and a diagnosis device of the present disclosure will be described in detail with reference to the accompanying drawings. However, in order to avoid the following description from being unnecessarily redundant and to make it easier for those skilled in the art to understand, a detailed description more than necessary may be omitted. For example, a detailed description of a well-known item or a redundant description of substantially the same configuration may be omitted.

In the present specification, the embodiments of the present disclosure will be described in conjunction with an example in which a three-phase motor including three-phase (U-phase, V-phase, and W-phase) windings is used. However, an n-phase motor having n-phase (n is an integer of 4 or more) windings such as four phases and five phases is also within the scope of the present disclosure, and the generator is also within the scope of the present disclosure.

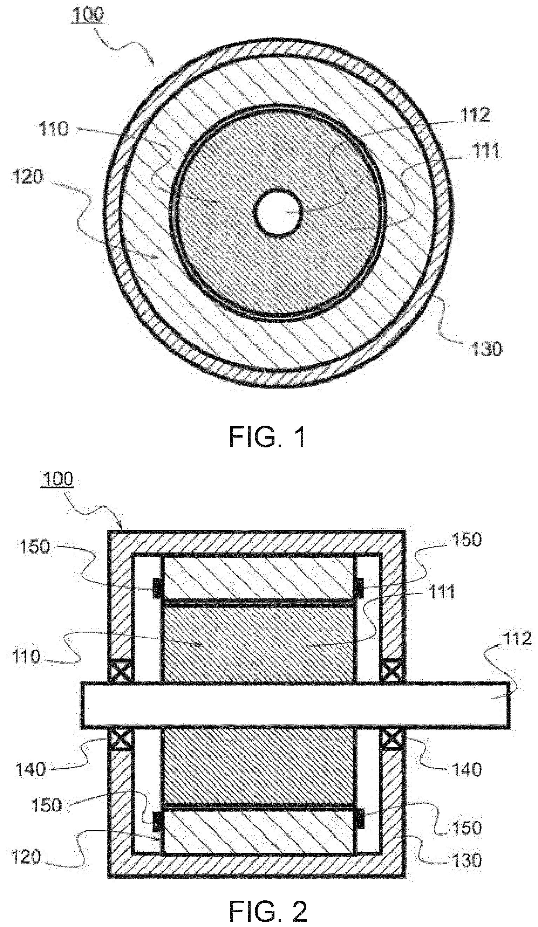

Figs. 1 and 2 are diagrams schematically illustrating a configuration of the motor of the present embodiment. Fig. 1 is a horizontal cross-sectional view illustrating a cross section perpendicular to a rotation shaft of the motor, and Fig. 2 is a vertical cross-sectional view illustrating a cross section viewed at the surface including the rotation shaft of the motor.

A motor 100 includes a rotor 110 which is also called a rotor, a stator 120 which is also called a stator, and an outer frame 130 that is referred to as a housing and extends in a tubular shape. The stator 120 is fixed in the outer frame 130. The rotor 110 is inserted inside the stator 120 and rotates inside the stator 120 about a rotation shaft 112. That is, the example illustrated here is an inner rotor type motor 100 in which a stator surrounds a rotor. However, the rotary electric machine of the present invention may be an outer rotor type.

The stator 120 generates a rotating magnetic field, and the rotor 110 includes a rotation shaft 112, also referred to as a shaft, and a rotor core 111 fixed to the rotation shaft 112. The rotor 110 may include a magnet or a winding (not illustrated) incorporated in the rotor core 111. The rotor core 111 is also called a rotor core and is generally made of a magnetic material containing iron. The rotor 110 receives stress from the rotating magnetic field and rotates about the rotation shaft 112.

Windings described later are applied to the stator 120. In addition, Hall sensors 150, which are a type of magnetic sensors, are attached to both end surfaces of the stator 120 in the direction in which the rotation shaft 112 extends. The arrangement of the Hall sensors 150 will be described in detail later.

The outer frame 130 covers the rotor 110 and the stator 120, and a bearing 140 that holds the rotation shaft 112 is incorporated in the outer frame. The bearing 140 holds the rotation shaft 112, and the rotation shaft 112 is rotatable while being held by the bearing 140. The outer frame 130 corresponds to an example of a housing in which the bearing is incorporated. The bearing 140 is incorporated into both a load side (for example, the right side in Fig. 2) on which a load is applied to the rotation shaft 112 and a non-load side (for example, the left side in Fig. 2) on which no load is applied. In other words, the bearings 140 are provided on both sides of the rotation shaft 112 with the rotor 110 interposed therebetween.

Here, the structure of the stator 120 will be further described.

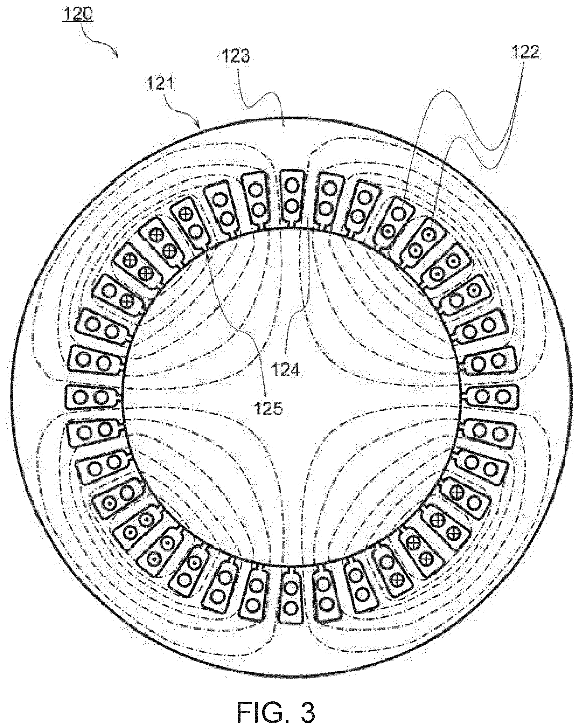

Fig. 3 is a diagram schematically illustrating the structure of the stator 120.

The stator 120 includes a stator core 121 also referred to as a core and a winding 122 also referred to as a coil. The stator core 121 is generally made of a magnetic material containing iron. The stator core 121 includes an annular ring portion 123 functioning as a yoke for guiding a magnetic flux, a tooth portion 124 also referred to as teeth, protruding inward from the ring portion 123 toward the rotor 110 and extending along the rotation shaft 112, and a groove portion 125 also referred to as a slot extending between the tooth portions 124. Fig. 3 illustrates an example in which the groove portions are, for example, 36 slots. The tooth portions 124 and the groove portions 125 extend parallel to the rotation shaft of the motor 100, that is, in a direction perpendicular to a paper surface of Fig. 3.

The winding 122 is wound around the stator core 121. A part of the winding 122 passes through the groove portion 125 and extends in the direction perpendicular to the paper surface of Fig. 3 over the entire length of the groove portion 125. A direction through which the winding 122 passes is indicated by a symbol in Fig. 3. However, in Fig. 3, for example, the direction of the U-phase winding 122 among the U-phase, V-phase, and W-phase windings 122 is illustrated. That is, in the example illustrated in Fig. 3, the windings 122 located in the upper right direction and the lower left direction in the drawing pass through the groove portion 125 toward the front side in the drawing, and the windings 122 located in the upper left direction and the lower right direction in the drawing pass through the groove portion 125 toward the back side in the drawing. The winding 122 passed through the groove portion 125 in this manner is connected to each other outside the groove portion 125. In the example illustrated in Fig. 3, the winding 122 located in the upper right direction in the drawing is connected to the winding 122 located in the upper left direction in the drawing, and the winding 122 located in the lower left direction in the drawing is connected to the winding 122 located in the lower right direction in the drawing. As a result, in the example of Fig. 3, the upper side and lower side of the figure are the inner portions surrounded by the winding 122. Since there are the plurality of tooth portions 124 within a range surrounded by the winding 122, the winding 122 illustrated in Fig. 3 is wound in a distribution manner.

When a current flows through the connected windings 122 as illustrated in Fig. 3, a magnetic field is generated as indicated by a dotted line in Fig. 3. In the example illustrated in Fig. 3, the number of poles of the stator 120 is four.

The number of poles of the stator 120 is not limited to 4, and may be 2, 6, or 8 depending on how the winding 122 is passed and connected.

The magnetic field illustrated in Fig. 3 is, for example, a magnetic field formed by the U-phase winding 122. However, the three-phase windings 122 of a U phase, a V phase, and a W phase exist in the stator 120, and the three-phase windings 122 are sequentially used to sequentially form each magnetic field, thereby forming a rotating magnetic field.

The rotation shaft 112 of the rotor 110 rotationally driven by the rotating magnetic field is held by the bearing 140 described above.

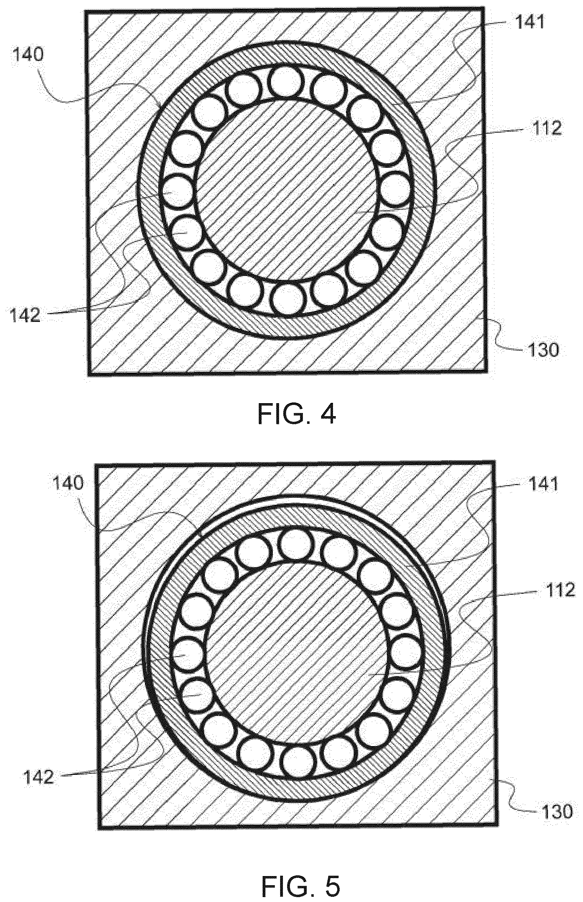

Fig. 4 is a diagram schematically illustrating the structure of the bearing.

As the bearing 140, a slide bearing in which the inner wall surface of the fixed portion and the outer peripheral surface of the rotation shaft directly slide, or a rolling bearing in which a rolling member is interposed between the inner wall surface of the fixed portion and the outer peripheral surface of the rotation shaft can be adopted. In the present embodiment, as an example, a rolling bearing is adopted as the bearing 140. In particular, in a large industrial motor, a rolling bearing in which a roller or a ball is used as a rolling member is desirable in order to withstand a large rotational load.

The bearing 140 includes an outer ring 141 incorporated in the outer frame 130 and a plurality of roller members 142 disposed along an inner wall surface of the outer ring 141 and rolling along the inner wall surface. In the example illustrated in Fig. 4, the outer peripheral surface of the rotation shaft 112 is in contact with the roller member 142, and the roller member 142 rolls between the inner wall surface of the outer ring 141 and the outer peripheral surface of the rotation shaft 112. Although an inner ring fixed to the rotation shaft 112 may be provided between the outer peripheral surface of the rotation shaft 112 and the roller member 142, the outer peripheral surface of the rotation shaft 112 also serves as the inner ring in the example illustrated in Fig. 4.

For the motor 100, the bearing 140 is an important part for realizing stable rotation of the rotation shaft 112, and when wear or the like occurs in the bearing 140, it is desirable to diagnose the occurrence of wear or the like of the bearing 140 and perform maintenance before a failure occurs in the operation of the motor 100.

In the present embodiment, in particular, wear generated between the outer ring 141 and the outer frame 130 of the bearing 140 is to be diagnosed.
Fig. 5 is a diagram schematically illustrating a state in which wear occurs in the bearing.

When wear is generated between the outer ring 141 of the bearing 140 and the outer frame 130, a gap is generated between the outer ring 141 of the bearing 140 and the outer frame 130. As such wear, a case where the outer peripheral surface of the outer ring 141 of the bearing 140 wears down, a case where the hole of the outer frame 130 expands, and a case where both of them occur are considered. Hereinafter, these cases will be referred to as "wear of the bearing 140" without being particularly distinguished, and in the detailed description and the like, as a representative of these cases, a case where the hole of the outer frame 130 is enlarged will be described as an example.

Even when such wear occurs in the bearing 140, the rotation shaft 112 is held by the roller member 142 of the bearing 140 and rotates, but the position of the rotation shaft 112 is eccentric with respect to the original position. In the present embodiment, the occurrence of this eccentricity is diagnosed by the detection of the leakage magnetic field by the Hall sensors 150 illustrated in Fig. 2.

Here, details of the arrangement of the Hall sensors 150 will be described.

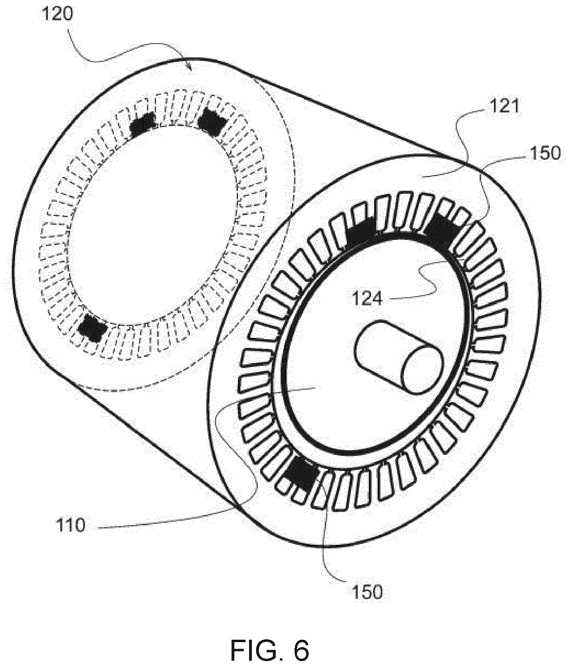

Fig. 6 is a diagram illustrating an arrangement positions of the Hall sensors with respect to the stator.

The Hall sensors 150 are attached to the stator core 121 of the stator 120. In Fig. 6, the position of the Hall sensor 150 is illustrated in a very large black square for easy understanding, but the actual Hall sensor 150 is smaller than the width of the tooth portion 124 of the stator core 121. The Hall sensor 150 is attached to the vicinity of the tip of the tooth portion 124 and is attached in a direction in which the magnetic field in the direction in which the tooth portion 124 protrudes is directed.

A plurality of Hall sensors 150 are attached to both ends of the stator 120. The plurality of Hall sensors 150 at one end of the stator 120 are attached at positions separated from each other in the rotation direction of the rotor 110. The Hall sensors 150 correspond to an example of a plurality of magnetic detection elements attached to the end of the stator core 121 in the direction in which the rotation shaft 112 extends while being separated from each other in the rotation direction of the rotation shaft 112. In the present embodiment, the Hall sensor 150 is attached to each of both ends of the stator core 121 in the direction in which the rotation shaft 112 extends.

In addition, at one end and the other end of the stator 120, the arrangement positions of the plurality of Hall sensors 150 are the same as each other when viewed in the direction along the rotation shaft 112.

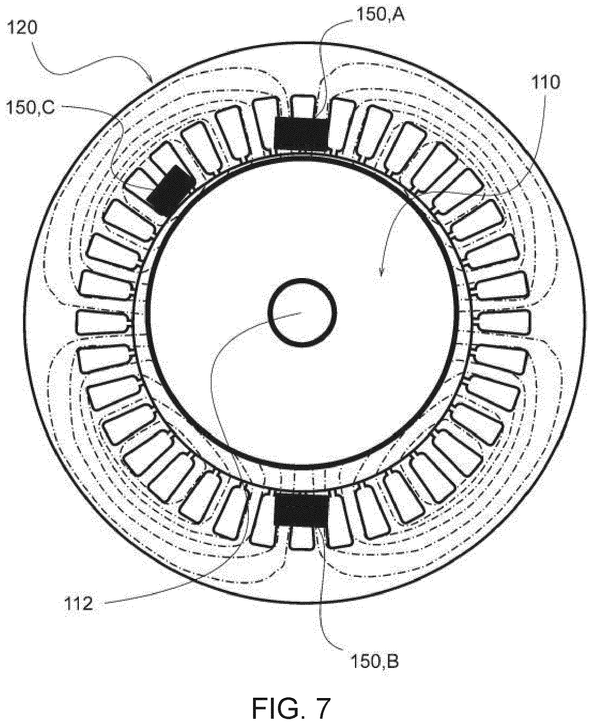

Fig. 7 is a diagram schematically illustrating the arrangement positions of the Hall sensors in the rotation direction of the rotor.

In the present embodiment, as an example, a pair of Hall sensors 150 among the plurality of Hall sensors 150 is disposed on both sides with the rotation shaft 112 interposed therebetween. That is, two of the plurality of Hall sensors 150 are attached at positions facing each other with the center of the stator core 121 interposed therebetween. Hereinafter, such a pair of Hall sensors 150 may be referred to as a sensor A and a sensor B. In addition, as an example, the sensors A and B are disposed at positions where the magnetic field is stronger than that of other positions in the entire circumference of the stator 120. The strength of the magnetic field here is the strength when any of the U phase, the V phase, and the W phase is focused on.

For such a pair of Hall sensors 150, another Hall sensor 150 is disposed in the present embodiment as an example. This is because it is desirable to include at least three magnetic detection elements including two magnetic detection elements attached at positions facing each other. Hereinafter, the other Hall sensor 150 may be referred to as a sensor C. As an example, the sensor C is disposed at a position where the magnetic field is weaker than that of other positions in the entire circumference of the stator 120. The strength of the magnetic field here is the strength in the phase focused on in the arrangement of the sensor A and the sensor B.

In the case of the four-pole stator 120 illustrated in Fig. 7, the sensor A, the sensor B, and the sensor C are disposed in directions of 0 degrees, 180 degrees, and 45 degrees around the rotation shaft 112.

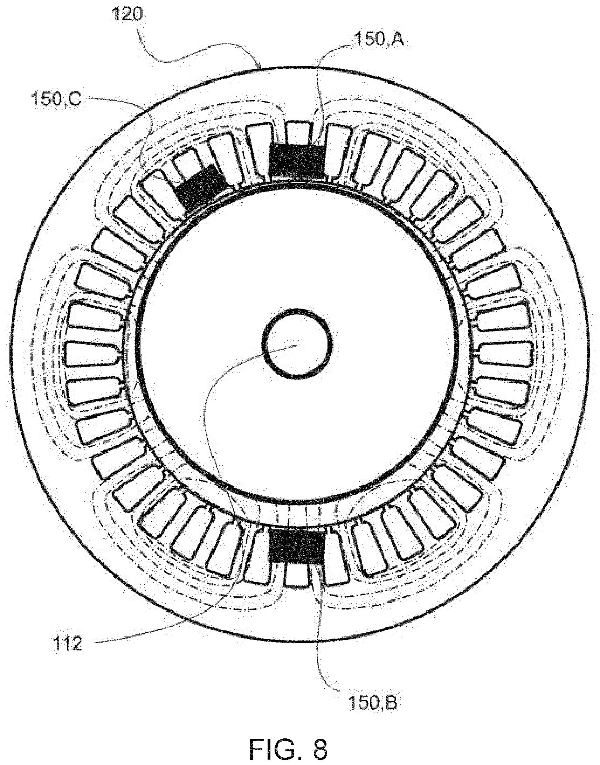

Fig. 8 is a diagram illustrating a modification of the arrangement of the Hall sensors.

The modification illustrated in Fig. 8 is a modification in a case where the stator 120 has six poles. Also in this modification, among the plurality of Hall sensors 150, the sensors A and B are disposed on both sides with the rotation shaft 112 interposed therebetween, and are disposed at places where the magnetic field is strong. Further, the sensor C is disposed at a place where the magnetic field is weak. As a result, in the modification illustrated in Fig. 8, the sensor A, the sensor B, and the sensor C are disposed in directions of 0 degrees, 180 degrees, and 30 degrees around the rotation shaft 112.

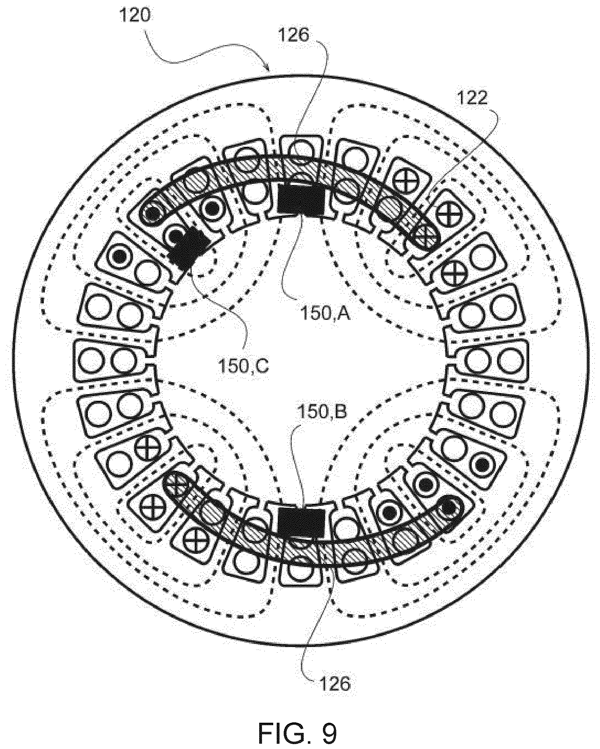

Fig. 9 is a diagram illustrating another modification of the arrangement of the Hall sensors.

The modification illustrated in Fig. 9 is a modification in a case where the stator 120 has four poles and 24 slots. Also in this modification, similarly to the arrangement illustrated in Fig. 6, the sensor A, the sensor B, and the sensor C are disposed in directions of 0 degrees, 180 degrees, and 45 degrees.

Fig. 9 also illustrates a positional relationship of the winding 122 with a jumper wire 126. The jumper wire 126 connects the winding 122 located at the upper right of the drawing and the winding 122 located at the upper left of the drawing, and connects the winding 122 located at the lower right of the drawing and the winding 122 located at the lower left of the drawing. The sensor A and the sensor B are disposed at the center of the jumper wire 126, and the sensor C is disposed at the base of the jumper wire 126.

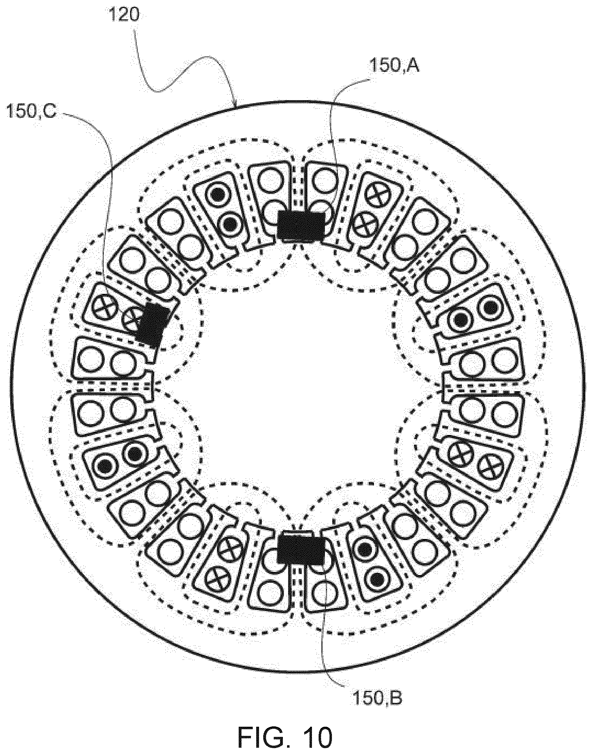

Fig. 10 is a diagram illustrating still another modification of the arrangement of the Hall sensors.

The modification illustrated in Fig. 10 is a modification in a case where the stator 120 has 8 poles. Also in this modification, among the plurality of Hall sensors 150, the sensors A and B are disposed on both sides with the rotation shaft 112 (not illustrated) interposed therebetween, and are disposed at places where the magnetic field is strong. Further, the sensor C is disposed at a place where the magnetic field is weak. As a result, in the modification illustrated in Fig. 10, the sensor A, the sensor B, and the sensor C are disposed in directions of 0 degrees, 180 degrees, and 82.5 degrees around the rotation shaft 112.

In the present embodiment, eccentricity of the rotation shaft 112 is diagnosed and wear of the bearing 140 is diagnosed by comparing the magnetic signals output when the leakage magnetic field is detected by the plurality of Hall sensors 150 disposed in this manner.

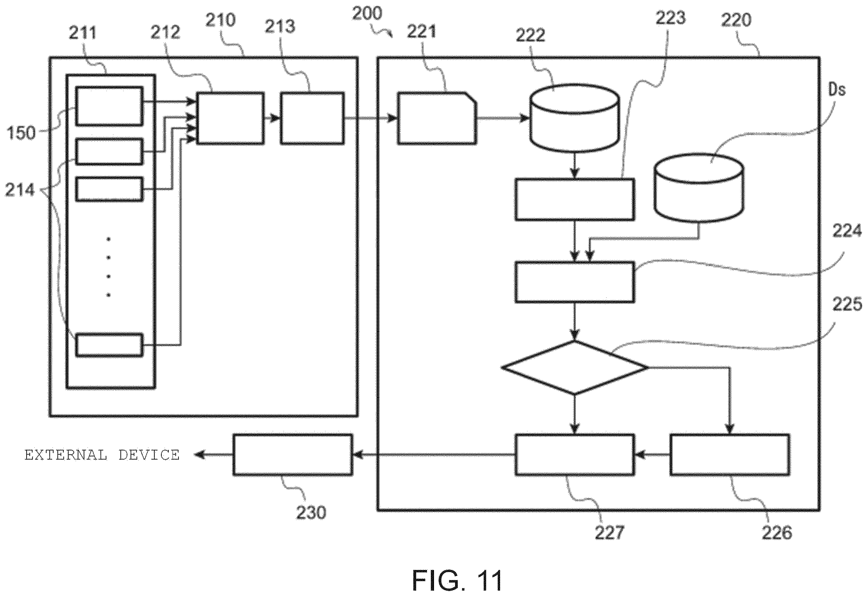

Fig. 11 is a functional block diagram illustrating a diagnostic system that diagnoses bearing wear.

The diagnostic system 200 includes a detection unit 210 and a diagnosis device 220. The diagnosis device 220 is an embodiment of the diagnosis device of the present invention.

The detection unit 210 includes a sensor group 211, an amplifier circuit 212, and an A/D converter 213. The sensor group 211 includes the Hall sensor 150 described above, and also includes various sensors 214 such as a current sensor, a rotation sensor, and a temperature sensor.

The amplifier circuit 212 amplifies the magnetic signal output from the Hall sensor 150 and the detection signals output from the various sensors 214. The A/D converter 213 converts the magnetic signal and the detection signal amplified by the amplifier circuit 212 into digital signals and outputs the digital signals to the diagnosis device 220.

The diagnosis device 220 includes a data acquisition unit 221, a data recording unit 222, an analysis unit 223, an evaluation unit 224, a primary determination unit 225, a wear amount conversion unit 226, and a comprehensive determination unit 227.

The data acquisition unit 221 acquires the signal output from the detection unit 210, and the data recording unit 222 records the signal. The analysis unit 223 performs analysis processing on the recorded signal, and the evaluation unit 224 calculates evaluation information from an analyzed signal and sample data Ds stored in advance. The primary determination unit 225 determines the presence or absence of abnormality of the bearing 140 based on the calculated evaluation information, and the wear amount conversion unit 226 converts the frequency of the fc signal to be described later into the wear amount of the bearing 140. The comprehensive determination unit 227 performs quality determination regarding the wear state of the bearing 140 on the basis of the determination result by the primary determination unit 225 and other information, and outputs a diagnosis result 230.

The diagnosis result 230 output from the diagnosis device 220 is transmitted to an external device such as a control device of the motor 100 and displayed.

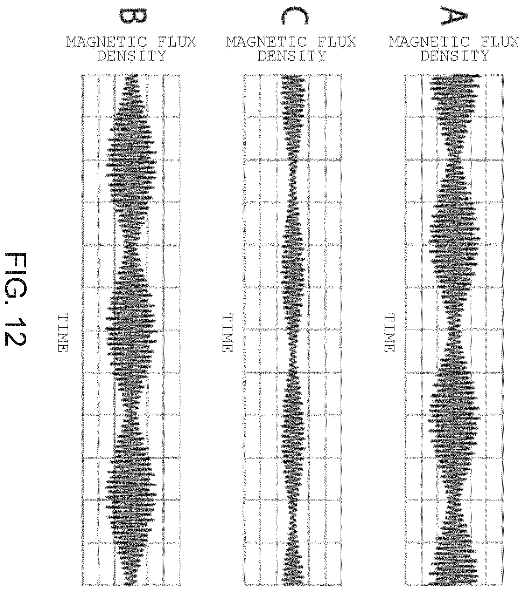

Hereinafter, specific processing contents of the magnetic signal in the diagnosis device 220 will be described in detail with reference to Figs. 12 to 21. Note that, in the following description, Figs. 7 and 11 will be appropriately referred to.

Fig. 12 is a diagram illustrating an example of the magnetic signal.

In Fig. 12, the horizontal axis represents time, and the vertical axis represents signal intensity. The signal intensity of the magnetic signal corresponds to a detection value of the magnetic flux density.

Fig. 12 illustrates a schematic example of the magnetic signal acquired by a data acquisition unit and recorded in a data recording unit. An upper part of Fig. 12 illustrates an example of the magnetic signal obtained from the sensor A, a lower part of Fig. 12 illustrates an example of the magnetic signal obtained from the sensor B, and a middle part of Fig. 12 illustrates an example of the magnetic signal obtained from the sensor C. In the magnetic signal from each of the sensors A, B, and C, vibration of a fine cycle corresponding to the rotation speed of the motor 100 occurs. In the case of an industrial motor, the rotation speed of the motor 100 is, for example, 50 Hz which is the same as the power source frequency.

Fig. 12 illustrates a signal example in a case where wear occurs in the bearing 140, and the wave height of the signal fluctuates like a beat waveform. If there is no wear on the bearing 140, the magnetic signal from each of the sensors A, B, and C show a constant wave height.

The magnetic signal illustrated in Fig. 12 is a magnetic signal obtained from each of the sensors A, B, and C during normal operation of the motor 100. In the diagnosis device 220, as described in detail below, eccentricity of the rotation shaft 112 due to wear of the bearing 140 can be diagnosed by such comparison of magnetic signals.

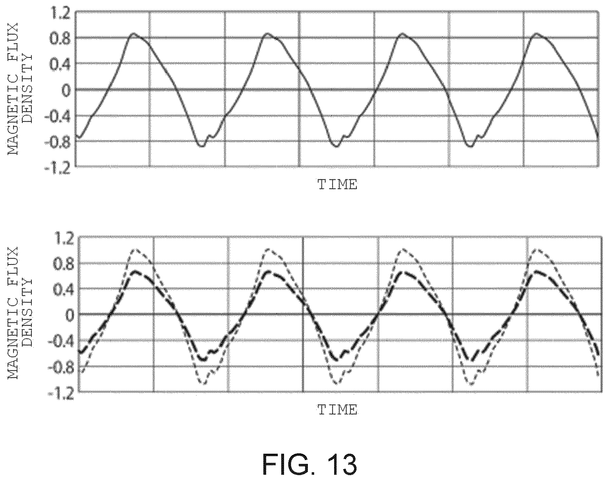

Fig. 13 is an enlarged view of a part of the magnetic signal.

In Fig. 13, the horizontal axis represents time, and the vertical axis represents signal intensity.

In Fig. 13, the signal waveform in a case where the bearing 140 is not worn is illustrated in the upper part, and the signal waveform in a case where the bearing 140 is worn is illustrated in the lower part.

When there is no wear on the bearing 140, the waveform of the magnetic signal from the sensor A is equal to the waveform of the magnetic signal from the sensor B. On the other hand, when wear occurs, eccentricity occurs in the rotation shaft 112. For example, as illustrated in Fig. 7, when the rotor 110 is biased to the sensor A side, the magnetic flux density of the leakage magnetic field increases on the sensor A side, and the amplitude of the waveform in the magnetic signal also increases. On the other hand, on the sensor B side, the magnetic flux density decreases due to the bias of the rotor 110, and the amplitude of the waveform in the magnetic signal also decreases. However, the eccentric direction of the rotation shaft 112 due to wear of the bearing 140 is not fixed, and the eccentric direction also moves with the rotation of the rotation shaft 112.

In the lower part of Fig. 13, the signal waveform on the sensor A side is illustrated by a thin broken line, and the signal waveform on the sensor B side is illustrated by a thick broken line. As described above, since a difference in amplitude occurs between the magnetic signal of the sensor A and the magnetic signal of the sensor B with the eccentricity of the rotation shaft 112, it is possible to diagnose the eccentricity of the rotation shaft 112 by comparing the magnetic signal of the sensor A with the magnetic signal of the sensor B. In particular, since the sensor A and the sensor B are attached at positions facing each other with the center of the stator core 121 interposed therebetween, the influence of the eccentricity of the rotation shaft 112 remarkably appears in the amplitude difference, so that the diagnosis of the eccentricity is easy.

In addition, since the sensors A and B are attached at positions where the magnetic field is stronger than that of other positions in the entire circumference of the stator core 121, the magnetic signal is remarkably affected by the eccentricity of the rotation shaft than when the sensors A and B are attached to other positions.

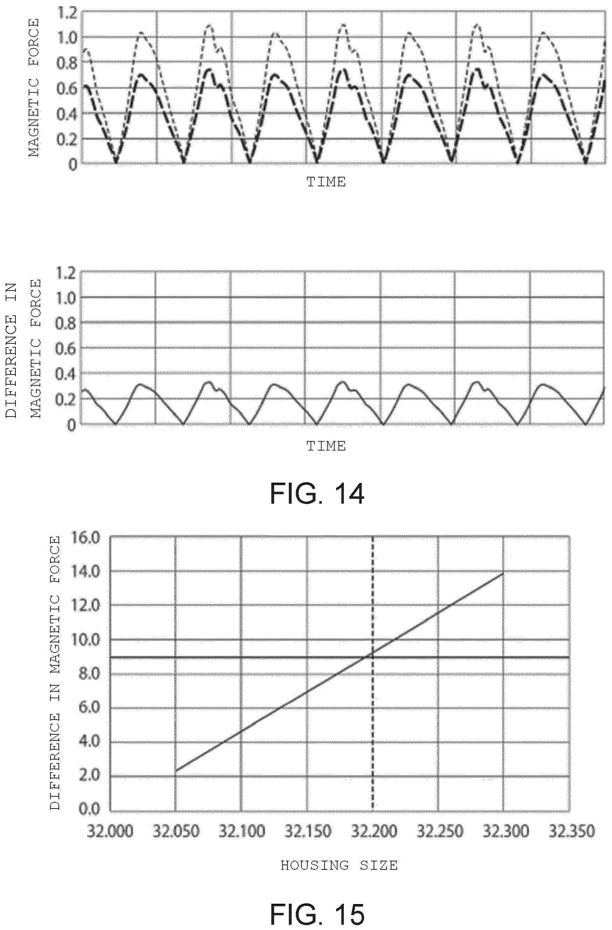

Fig. 14 is a diagram illustrating a waveform of a magnetic force obtained from the magnetic signal.

The analysis unit 223 of the diagnosis device 220 illustrated in Fig. 11 converts the magnetic signal into a magnetic force signal in order to compare the magnetic signal of the sensor A with the magnetic signal of the sensor B. Specifically, the value of the magnetic signal is squared to obtain the signal value of the magnetic force. The upper part of Fig. 14 illustrates a signal waveform of the magnetic force obtained from the signal waveform illustrated in the lower part of Fig. 13. Here, the signal waveform on the sensor A side is indicated by a thin broken line, and the signal waveform on the sensor B side is indicated by a thick broken line.

Then, in the processing in the analysis unit 223, as illustrated in the lower part of Fig. 14, a difference waveform between the signal waveform on the sensor A side and the signal waveform on the sensor B side is obtained. With respect to such a difference waveform obtained by the processing of the analysis unit 223, the evaluation unit 224 performs averaging in a set time such as 5 seconds, for example. The difference thus averaged is hereinafter referred to as "difference in magnetic force". This difference in magnetic force is one of the evaluation information, and as the difference in magnetic force is larger, the eccentricity of the rotation shaft 112 is larger, and thus there is a high possibility that wear has occurred.

Fig. 15 is a diagram illustrating a relationship between bearing wear and a difference in magnetic force.

The horizontal axis in Fig. 15 represents a value obtained by converting the wear amount of the bearing 140 into the size of the hole of the outer frame 130 in which the bearing 140 is incorporated, and the initial value of 0 wear is 32 mm which is the same as the diameter of the outer ring 141 of the bearing 140. The vertical axis in the drawing represents the difference in magnetic force.

Fig. 15 illustrates the difference in magnetic force obtained when wear of the bearing 140 actually occurs. The difference in magnetic force with respect to the size of the hole of the outer frame 130 is generally in a substantially linear relationship within the range as illustrated in Fig. 15. That is, as the wear of the bearing 140 progresses and the hole of the outer frame 130 expands, the difference in magnetic force also increases, so that the difference in magnetic force obtained by the evaluation unit 224 is an index indicating the wear amount of the bearing 140.

Although not all the difference in magnetic force is caused by wear, it is presumed that there is a possibility of bearing wear when the difference in magnetic force reaches a certain value. In a case where expansion of the hole of the outer frame 130 due to wear is expansion to, for example, 0.2 mm indicated by a dotted line in the drawing, there is no problem as a function of the bearing 140, a threshold is provided at, for example, 9.0 indicated by a horizontal line in the drawing with respect to the difference in magnetic force. Then, the primary determination unit 225 compares the difference in magnetic force obtained by the evaluation unit 224 with a threshold to determine the possibility of occurrence of wear.

That is, a combination of the analysis unit 223, the evaluation unit 224, and the primary determination unit 225 functions as an example of a first diagnosis unit that diagnoses eccentricity on the rotation shaft 112 by comparing the magnetic field intensities indicated by the magnetic signals acquired by the signal acquisition unit 221.

Note that, as the difference in magnetic force to be compared with the threshold by the primary determination unit 225, the difference in magnetic force calculated from the difference waveform obtained by the analysis unit 223 may be directly used. However, in the present embodiment, a residual value obtained by subtracting the difference in magnetic force in the sample data Ds is calculated by the evaluation unit 224, and the calculated residual value is used for comparison with the threshold. As the sample data Ds, for example, a magnetic signal detected by the Hall sensor 150 immediately after the motor 100 is installed or the like is stored. Since such sample data Ds is data representing a so-called initial state, it is possible to more accurately diagnose wear by subtracting the difference in magnetic force generated in the initial state as being irrelevant to wear.

As described above, eccentricity of the rotation shaft 112 may occur due to a cause other than wear of the bearing 140. Therefore, in the present embodiment, more accurate wear diagnosis is performed by detecting a creep phenomenon associated with wear of the bearing 140. First, the generation principle of the creep phenomenon will be described.

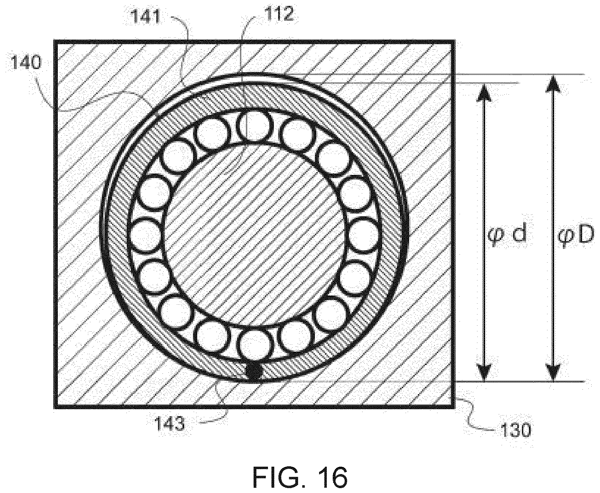

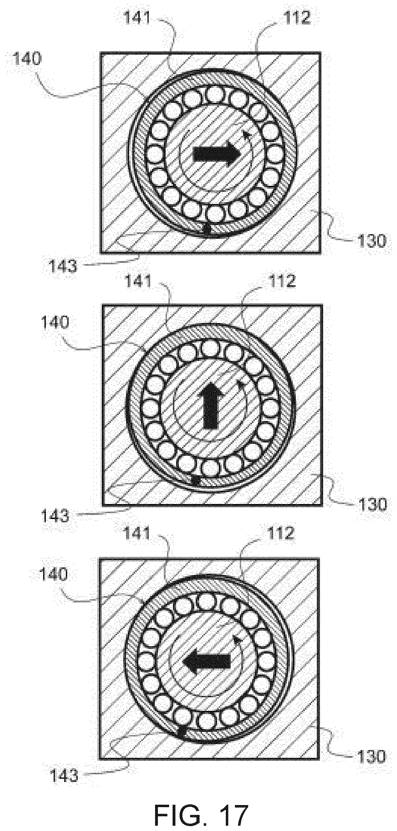

Figs. 16 and 17 are diagrams illustrating the generation principle of the creep phenomenon.

Fig. 16 illustrates the bearing 140 in which wear, which is a premise of the creep phenomenon, has occurred. When the bearing 140 wears, as illustrated in Fig. 16, a difference is generated between the diameter d of the outer ring 141 and the diameter D of the hole of the outer frame 130, and a gap is generated between the outer ring 141 and the outer frame 130. When such a gap is generated, as described below, a creep phenomenon in which the outer ring 141 rotates with respect to the outer frame 130 with the rotation of the rotation shaft 112 occurs. Here, for convenience of description, a mark 143 indicating a specific portion of the outer ring 141 is illustrated.

As illustrated in Fig. 17, when the rotation shaft 112 rotates, for example, to the left, the direction of the rotational load sequentially changes to the right direction, the upward direction, and the left direction, and the bearing 140 is sequentially pressed against the hole of outer frame 130 in the right direction, the upward direction, and the left direction. When a gap is generated between the outer ring 141 and the outer frame 130, the outer ring 141 of the bearing 140 rolls along the inner wall of the hole of the outer frame 130 with such pressing. As the outer ring 141 rolls, the direction of the outer ring 141 gradually rotates in a direction opposite to the rotation direction of the rotation shaft 112 as indicated by the mark 143.

As described above, in the creep phenomenon, the outer ring 141 rotates in the direction opposite to the rotation direction of the rotation shaft 112. In addition, a rotation frequency fc of the outer ring 141 due to the creep phenomenon is lower than the rotation frequency of the rotation shaft 112, that is, a rotation frequency fr of the motor 100. The theoretical value of the rotation frequency fc of the outer ring 141 due to the creep phenomenon is calculated by an expression of fc = (π (D - d)/πD) × fr. As an example, when the diameter d of the outer ring 141 is 32.00 mm, the diameter D of the hole of the outer frame 130 is 32.30 mm, and the rotation frequency fr of the motor 100 is 1500 rpm, the rotation frequency fc of the creep phenomenon is 14 rpm (= 0.233 Hz).

Whether the signal component having such a frequency is present is confirmed by the analysis processing of the magnetic signal, whereby it is possible to confirm whether the eccentricity of the rotation shaft 112 is caused by wear. In the following description, a signal component having the rotation frequency fc of the creep phenomenon is referred to as a fc signal.

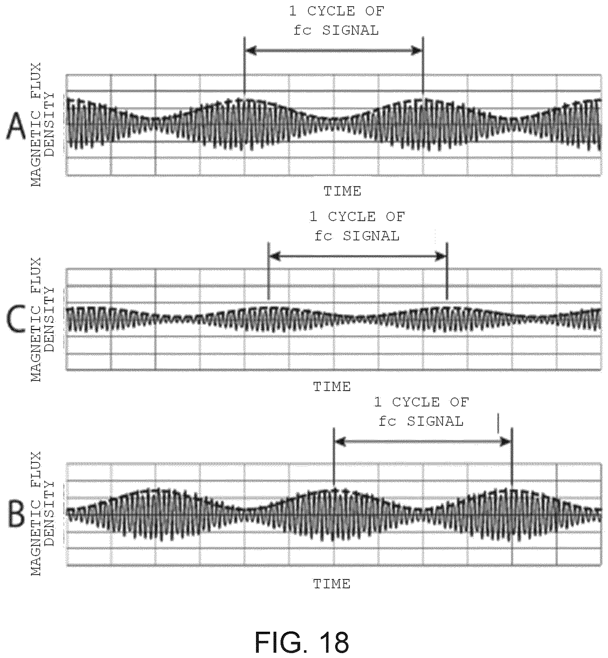

Fig. 18 is a diagram for explaining analysis of the fc signal.

In Fig. 18, the horizontal axis represents time, and the vertical axis represents magnetic flux density. An upper part of Fig. 18 illustrates an example of the magnetic signal obtained from the sensor A, a lower part of Fig. 18 illustrates an example of the magnetic signal obtained from the sensor B, and a middle part of Fig. 18 illustrates an example of the magnetic signal obtained from the sensor C.

The analysis unit 223 of the diagnosis device 220 performs peak value processing and periodic analysis on the magnetic signal also illustrated in Fig. 12, and calculates an envelope as indicated by a dotted line in Fig. 18. In the evaluation unit 224, the frequency component common to the sensors A, B, and C among the frequency components of the envelope calculated in this manner is set as the fc signal. When such a fc signal is included in the magnetic signal, there is a possibility that the creep phenomenon occurs. The frequency fc of the fc signal is also one of the evaluation information.

In the present embodiment, accuracy of the fc signal is improved by comparison with the sample data Ds. The evaluation unit 224 compares the result of the frequency analysis on the magnetic signal with the result of the frequency analysis on the sample data Ds.

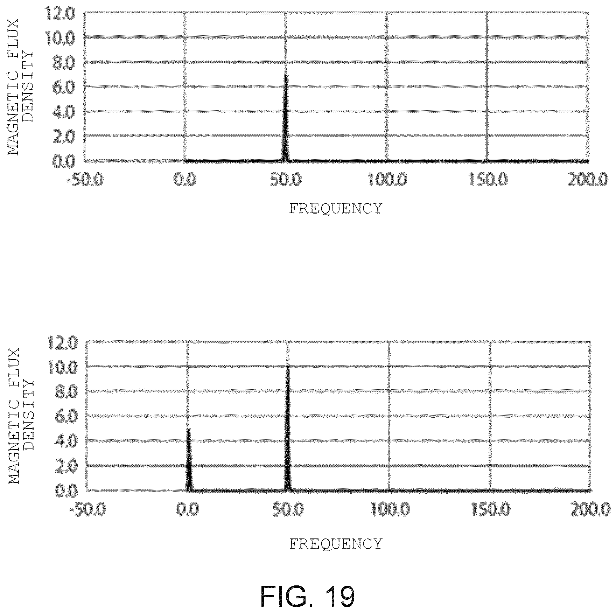

Fig. 19 is a diagram illustrating an example of the result of frequency analysis.

In Fig. 19, the horizontal axis represents the frequency, and the vertical axis represents the magnetic flux density.

The upper part of Fig. 19 illustrates an analysis result in the sample data Ds, and the lower part of Fig. 19 illustrates an analysis result in the magnetic signal. The peak occurring at a frequency of 50 Hz is a peak corresponding to the rotation speed of the motor 100, and occurs in common in both the analysis results. On the other hand, a peak at a low frequency occurs only in the analysis result at the lower part, and in the evaluation unit 224, the frequency of this peak is set as the frequency fc of the fc signal.

The frequency fc thus obtained is associated with the wear amount of the bearing via the above-described equation for theoretical value calculation.

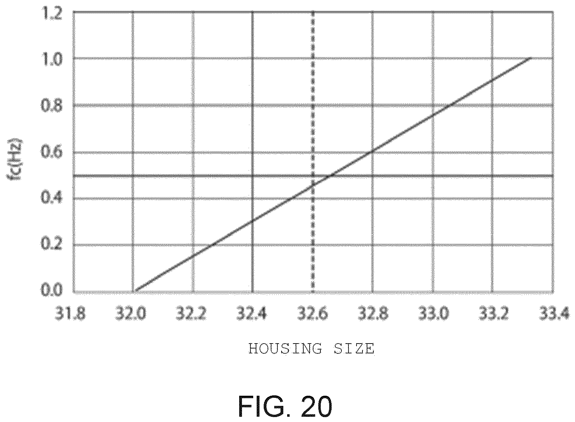

Fig. 20 is a diagram illustrating a relationship between the frequency of the fc signal and bearing wear.

The horizontal axis in Fig. 20 represents a value obtained by converting the wear amount of the bearing 140 into the size of the hole of the outer frame 130 in which the bearing 140 is incorporated, and the initial value of 0 wear is 32 mm which is the same as the diameter of the outer ring 141 of the bearing 140. The vertical axis in the drawing represents the frequency fc.

The size of the hole of the outer frame 130 and the frequency fc have a substantially linear relationship within the range illustrated in Fig. 20. That is, since the frequency fc also increases as the wear of the bearing 140 progresses and the hole of the outer frame 130 expands, the value of the frequency fc obtained by the evaluation unit 224 becomes an index indicating the wear amount of the bearing 140.

When the expanding of the hole of the outer frame 130 due to wear exceeds, for example, the expanding of 0.6 mm indicated by a dotted line in the drawing, for example, it is desirable to perform maintenance on the bearing 140, a threshold is provided at, for example, 0.5 Hz indicated by a horizontal line in the drawing with respect to the frequency fc. Then, the primary determination unit 225 compares the frequency fc obtained by the evaluation unit 224 with the threshold to determine the possibility of occurrence of wear.

The combination of the analysis unit 223, the evaluation unit 224, and the primary determination unit 225 also corresponds to an example of a second diagnosis unit that diagnoses the creep phenomenon of the bearing holding the rotation shaft 112 by analyzing the frequency component in the magnetic field intensity indicated by the magnetic signal.

When both the difference in magnetic force and the frequency fc described above reach the threshold, the primary determination unit 225 determines that an abnormality has occurred in the bearing 140 and outputs the determination result to the comprehensive determination unit 227. On the other hand, when at least one of the differences in magnetic force and the frequency fc does not reach the threshold, the primary determination unit 225 does not determine that the bearing 140 is abnormal and sends the value of the frequency fc to the wear amount conversion unit 226. The wear amount conversion unit 226 converts the frequency fc into the wear amount of the bearing 140 by back calculation using the formula for calculating the theoretical value of the frequency fc or conversion using the linear relationship illustrated in Fig. 20. The wear amount converted by the wear amount conversion unit 226 is sent to the comprehensive determination unit 227.

When the determination result that the abnormality has occurred in the bearing 140 is sent from the primary determination unit 225, the comprehensive determination unit 227 checks the phase difference between the fc signals for the magnetic signals obtained from the sensors A and B and the magnetic signal obtained from the sensor C.

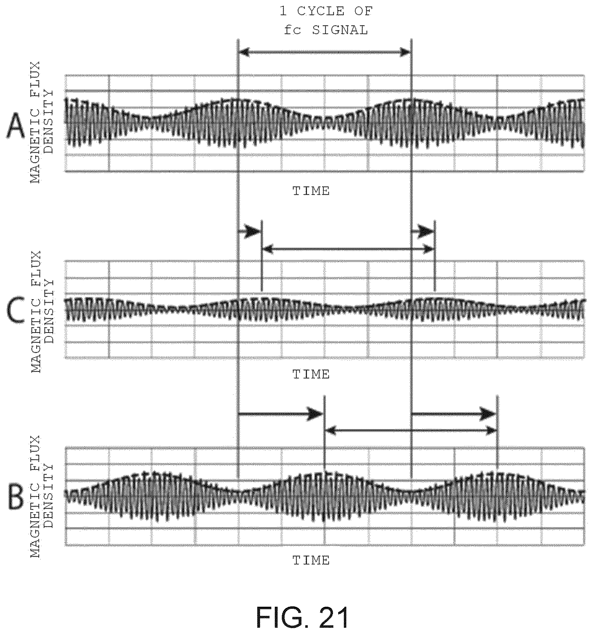

Fig. 21 is a diagram illustrating an example of the phase difference between the fc signals.

In Fig. 21, the horizontal axis represents time, and the vertical axis represents magnetic flux density. An upper part of Fig. 21 illustrates an example of the magnetic signal obtained from the sensor A, a lower part of Fig. 21 illustrates an example of the magnetic signal obtained from the sensor B, and a middle part of Fig. 21 illustrates an example of the magnetic signal obtained from the sensor C.

When the phase difference between the fc signals in the magnetic signals obtained from the sensors A, B, and C is a phase difference corresponding to the arrangement of the sensors A, B, and C on the end face of the stator 120, the comprehensive determination unit 227 determines that the fc signal is a true fc signal associated with the creep phenomenon. For example, in the case of the four-pole stator 120 illustrated in Fig. 7, since the sensors A, B, and C are disposed at 0 degrees, 180 degrees, and 45 degrees as described above, when the phase difference between the fc signals is 180 degrees between the sensors A and B and 45 degrees between the sensors A and C, it is determined that the fc signal is a true fc signal.

On the other hand, when the phase difference between the fc signals is, for example, 180 degrees between the sensors A and B but is a phase difference other than 45 degrees between the sensors A and C, it is determined that the fc signal is a false fc signal caused not by wear but by eccentricity caused by vertical vibration of the rotation shaft 112 or the like. In addition, in a case where the phase difference between the fc signals indicates rotational movement in the same direction as the rotation direction of the rotation shaft 112, it is determined that the fc signal is a false fc signal due to a spin phenomenon or the like in a direction opposite to the creep phenomenon.

The comprehensive determination unit 226 corresponds to an example of a third diagnosis unit that diagnoses the authenticity of the creep phenomenon by the phase difference between the low-frequency components included in the respective magnetic signals obtained by the sensors A, B, and C, which are three magnetic detection elements.

Since the sensor C is disposed in addition to the sensors A and B disposed facing to each other, it is possible to distinguish between eccentricity due to bearing wear and eccentricity due to other causes by comparing magnetic signals. In addition, since the sensors A and B are attached at positions where the magnetic field is stronger than that of other positions in the entire circumference of the stator core 121, and the sensor C is attached to a position where the magnetic field is weaker than that of other positions in the entire circumference of the stator core 121, the influence of the eccentricity of the rotation shaft can be easily diagnosed by magnetic signal comparison.

When it is determined that the fc signal is a true fc signal in such authenticity determination based on the phase difference between the fc signals, the comprehensive determination unit 227 further compares the wear amounts on the load side and the non-load side, and determines which of the load side and the non-load side the wear occurs. Since the Hall sensor 150 is provided at each of both ends of the stator 120, it is possible to distinguish the wear amount on the load side and the wear amount on the non-load side.

In addition, the comprehensive determination unit 227 determines that there is an abnormality in the bearing 140 when the wear amount sent from the wear amount conversion unit 226 rapidly increases from the previous diagnosis even if the determination result in the primary determination unit 225 shows no abnormality.

In this manner, the comprehensive determination unit 227 performs comprehensive determination based on various types of information, and outputs the final diagnosis result 230.

Hereinafter, a modification using a search coil as a magnetic detection element instead of the Hall sensor 150 will be described.

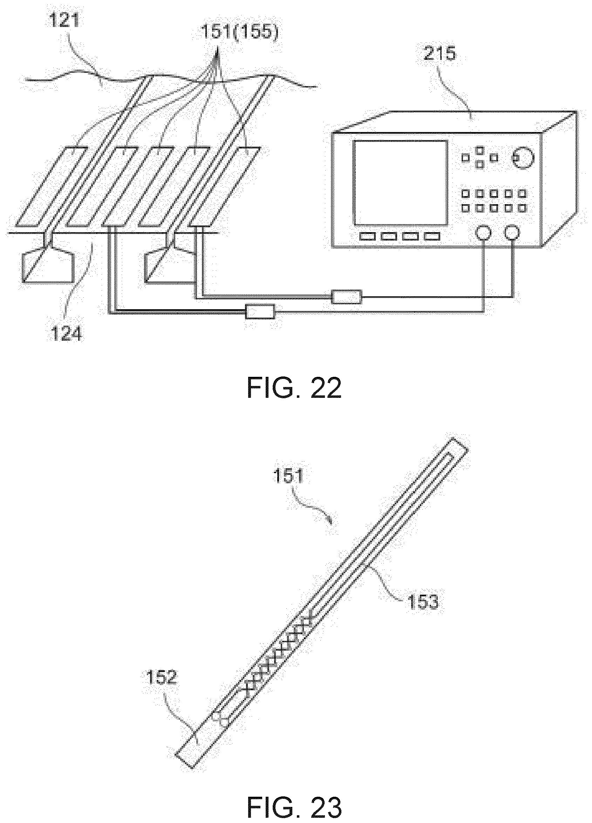

Fig. 22 is a diagram schematically illustrating a detection unit according to a modification.

In the modification illustrated in Fig. 22, a search coil 151 is attached to the inner peripheral surface of the stator core 121 (that is, the tip surface of the tooth portion 124). The search coil 151 has a length of, for example, 30 mm in the axial direction in which the rotation shaft 112 of the motor 100 extends and a width of, for example, 1 mm. Since the detection area of the search coil 151 for detecting magnetism is larger than that of the Hall sensor, detection accuracy is high. In addition, the search coil 151 is easier to create and attach than the Hall sensor.

Fig. 23 is a diagram illustrating a specific structure of the search coil 151.

The search coil 151 includes a resin film 152 and a conductive wire 153 wound around the film 152 and fixed to the film 152. The area surrounded by the conductive wire 153 wound in the same direction is the detection area of magnetism.

Returning to Fig. 22, the description will be continued.

The search coil 151 extends from the end of the stator core 121 toward the axial center of the stator core 121, and the axial length of the search coil 151 is 1/10 or more and 1/2 or less of the axial length of the stator core 121. By extending the search coil 151 in this manner, a sufficient detection area can be obtained. In addition, by providing the search coils 151 at both ends of the stator core 121 in the axial direction, it is possible to detect wear of each bearing 140 holding the rotation shaft 112 on both sides sandwiching the rotor 110 in a distinguished manner.

A plurality of search coils 151 are provided along the circumferential direction of the inner peripheral surface of the stator core 121. The detection accuracy is improved by integrating (adding) the detection values of the plurality of search coils 151. The plurality of search coils 151 in which the detection values are integrated (added) with each other function as one search coil as a whole. One search coil functioning by the plurality of search coils 151 corresponds to an example of the search coil according to the present invention. In the following description, the plurality of search coils 151 may be referred to as a search coil group 155. The search coil 151 may be used alone as an example of the search coil according to the present invention.

In Fig. 22, a spectrum analyzer 215 is illustrated as corresponding to the amplifier circuit 212 and the A/D converter 213 of the detection unit 210 illustrated in Fig. 11. In addition, for convenience of illustration, wirings are illustrated for only some of the plurality of search coils 151, but in practice, wirings are connected to all the search coils 151. The spectrum analyzer 215 integrates the voltages of the plurality of search coils 151 to obtain a magnetic flux waveform.

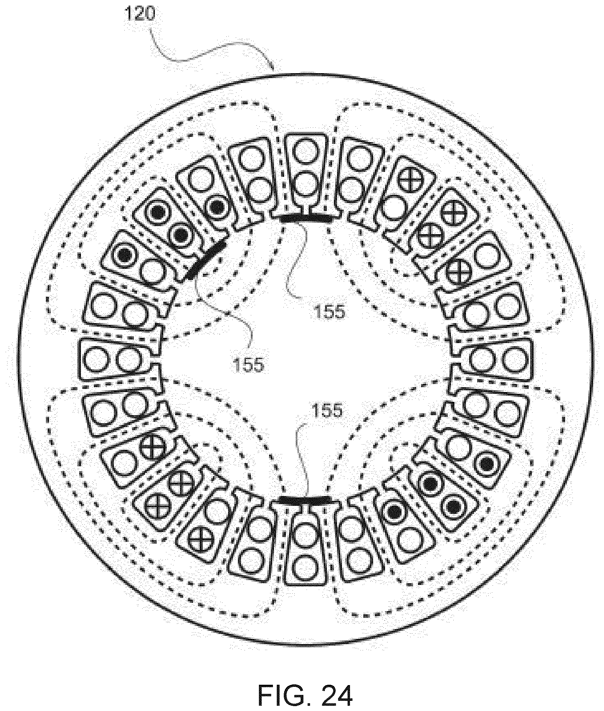

Fig. 24 is a diagram schematically illustrating an arrangement position of the search coil group in the rotation direction of the rotor.

Also in the case of the search coil group 155, for example, the same arrangement as in the case of the Hall sensor is used. That is, the pair of search coil groups 155 is disposed, for example, on both sides with the rotation shaft 112 interposed therebetween, and the pair of search coil groups 155 is disposed at a position where the magnetic field is stronger than that of other positions, for example, in the entire circumference of the stator 120. In addition, for such a pair of search coil groups 155, another search coil group 155 is disposed, for example, at a position where the magnetic field is weaker than that of other positions. Each search coil group 155 can obtain a sufficient detection area by spreading to 1/16P turns or more (P = the number of poles) and 1/4P turns or less of the inner circumference of the stator 120 with respect to the circumferential direction in which the rotation shaft 110 rotates. That is, since P = 4 in the example illustrated in Fig. 24, the search coil group 155 desirably has a spread of 22.5 degrees or less.

The search coil group 155 corresponds to an example of a search coil extending along the axial direction and spreading along the circumferential direction.

Next, another modification in which the search coil is used will be described.

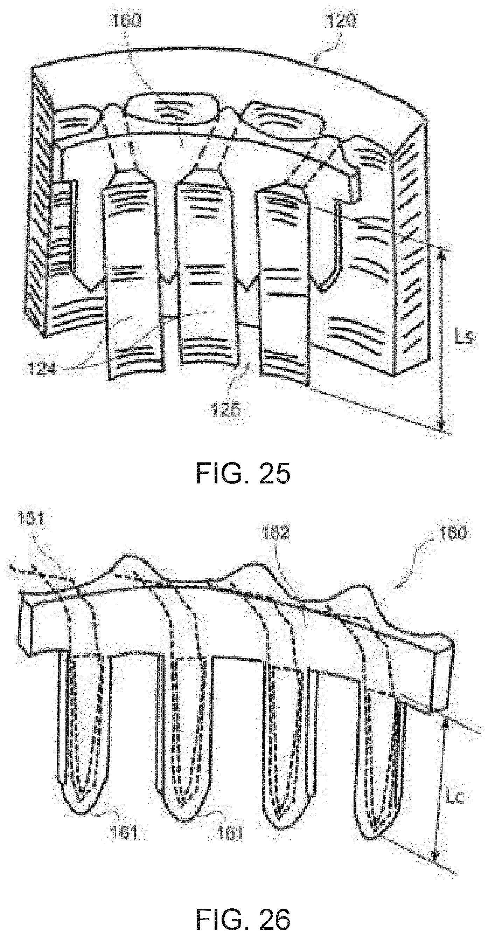

Fig. 25 is a diagram illustrating a modification including a comb-shaped member in which the search coil is incorporated.

In the case of the modification illustrated in Fig. 25, for example, a search coil to be described later is embedded in a comb-shaped member 160 made of resin, and the comb-shaped member 160 is inserted into a gap (that is, the groove portion 125) between tooth portions 124 from the end portion of the stator 120.

Fig. 26 is a diagram illustrating the structure of the comb-shaped member 160.

The comb-shaped member 160 includes a wedge portion 161 inserted into the gap between the tooth portions 124, a connecting portion 162 connecting the wedge portions 161 to each other, and a search coil 151 embedded inside. The wedge portion 161 corresponds to an example of a wedge member according to the present invention, and the connecting portion 162 corresponds to an example of a connecting portion according to the present invention. In the example illustrated in Fig. 26, the search coil 151 is embedded in each of the plurality of wedge portions 161. The wedge portion 161 may be used as an individual member without being connected by the connecting portion 162. In addition, the search coil 151 may be attached to the surface of the wedge portion 161.

As a material of the comb-shaped member 160, for example, a thermosetting resin or a phenol resin is used, or, for example, a magnetic material (compressed powder) is used. When the resin is used, the periphery is not damaged when the wedge portion 161 is inserted, which is preferable.

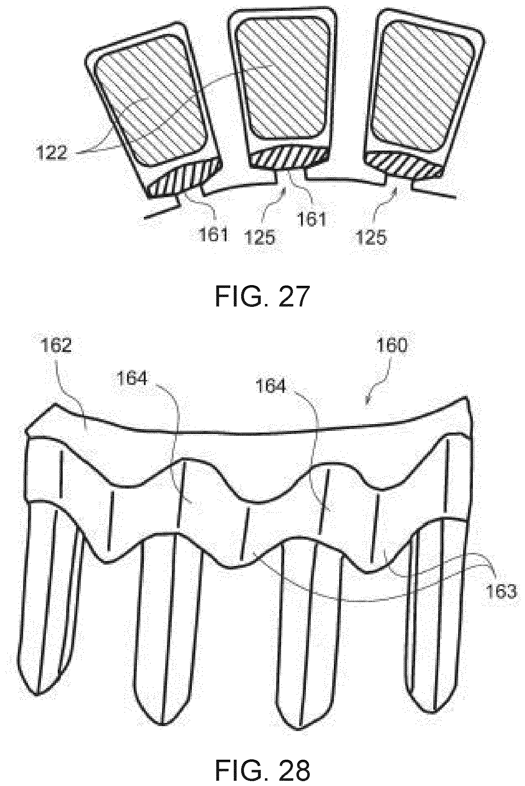

Fig. 27 is a diagram illustrating an insertion location of the wedge portion 161.

The winding 122 is inserted into the groove portion 125 of the stator 120, and the wedge portion 161 of the comb-shaped member 160 is inserted into a gap portion adjacent to the winding 122 in the groove portion 125. By inserting the comb-shaped member 160 into the groove portion 125, the search coil 151 is easily attached to the stator 120.

Fig. 28 is a diagram illustrating a back surface of the comb-shaped member 160.

The back surface side (that is, the side facing the winding 122) of the connecting portion 162 of the comb-shaped member 160 has a concavo-convex structure. That is, a round convex portion 163 is provided at a position corresponding to a space between the windings 122, and a round concave portion 164 is provided at a position corresponding to each winding 122. Such a curved concavo-convex structure achieves safe contact between the connecting portion 162 and the winding 122 when the comb-shaped member 160 is inserted.

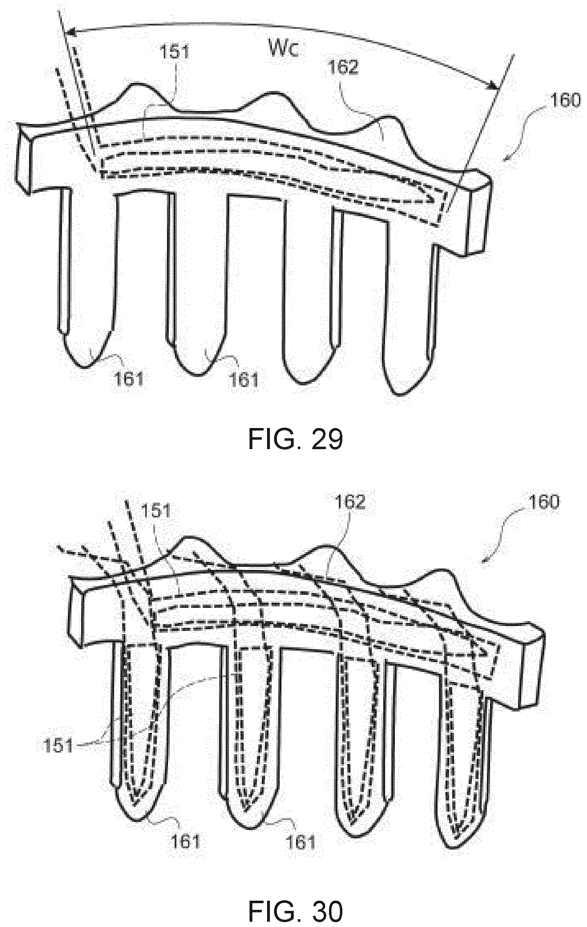

Fig. 29 is a diagram illustrating another example of the comb-shaped member 160.

The comb-shaped member 160 illustrated in Fig. 29 also includes the wedge portion 161, the connecting portion 162, and the search coil 151, but in the example of Fig. 29, the search coil 151 is embedded in the connecting portion 162, and the search coil 151 spreads in the circumferential direction of the stator 120. According to the search coil 151 spreading in the circumferential direction, the average value of the magnetic flux density in the circumferential direction is detected.

Fig. 30 is a diagram illustrating still another example of the comb-shaped member 160.

The comb-shaped member 160 illustrated in Fig. 30 also includes the wedge portion 161, the connecting portion 162, and the search coil 151, and in the example of Fig. 30, the search coil 151 is embedded in both the wedge portion 161 and the connecting portion 162. The search coil 151 illustrated in Fig. 30 also corresponds to an example of the search coil extending along the axial direction and spreading along the circumferential direction.

Hereinafter, the relationship between the size of the search coil 151 and the difference in magnetic force obtained by measurement in the search coil 151 will be described.

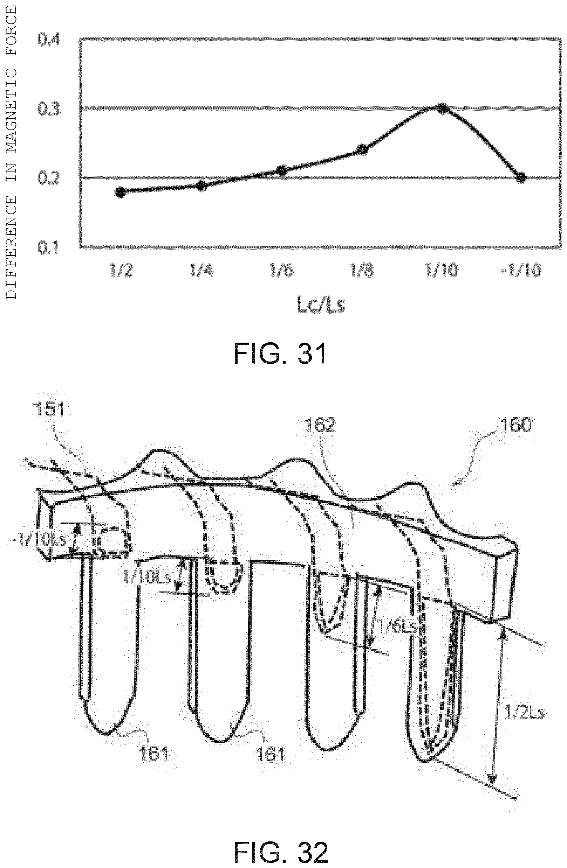

Fig. 31 is a graph illustrating the relationship between the size of the search coil and the difference in magnetic force in the example illustrated in Fig. 26.

In the graph of Fig. 31, the vertical axis represents the difference in magnetic force obtained by measurement with the search coil 151, and the horizontal axis represents the size of the search coil 151. Specifically, as the size of the search coil 151 illustrated in Fig. 26, a ratio Lc/Ls of the axial length Lc in the search coil 151 illustrated in Fig. 26 based on the axial length Ls in the tooth portion 124 illustrated in Fig. 25 (that is, the length of the stator core 121) is used. The reference point of the length Lc of the search coil 151 is the axial end surface of the stator core 121, in other words, the base of the wedge portion 161 extending from the connecting portion 162 is the reference point of the length Lc.

Fig. 32 is a diagram illustrating the search coil 151 having different lengths Lc.

Fig. 32 illustrates an example in which the length Lc of the search coil 151 is 1/2Ls, an example in which the length Lc is 1/6Ls, an example in which the length Lc is 1/10Ls, and an example in which the length Lc is -1/10Ls. In the example in which the length Lc of the search coil 151 is -1/10Ls, the search coil 151 extends from the base of the wedge portion 161 toward the connecting portion 162.

The graph of Fig. 31 shows the difference in magnetic force obtained by measurement for the search coil 151 of each length Lc including the example illustrated in Fig. 32.

When the length Lc of the search coil 151 was 1/2 of the length Ls of the stator core 121, the difference in magnetic force obtained is 0.18, and detection with sufficient accuracy is possible. However, when the length Lc of the search coil 151 is longer than 1/2Ls, the difference in magnetic force becomes small, and the detection accuracy becomes insufficient.

When the length Lc of the search coil 151 is 1/10 of the length Ls of the stator core 121, the difference in magnetic force obtained is 0.3, which is the maximum. However, when the length Lc of the search coil 151 is shorter, the detection area in the search coil 151 is steeply reduced, and the detection accuracy becomes insufficient. When comparing the case where the length Lc of the search coil 151 is 1/10Ls and the case where the length Lc is -1/10Ls, it can be seen that the detection efficiency of the difference in magnetic force is lower in the case where the search coil 151 extends outward from the end of the stator core 121 than in the case where the search coil extends inward.

Therefore, it can be seen that the length Lc of the search coil 151 is desirably 1/10 or more and 1/2 or less of the axial length Ls of the stator core 121.

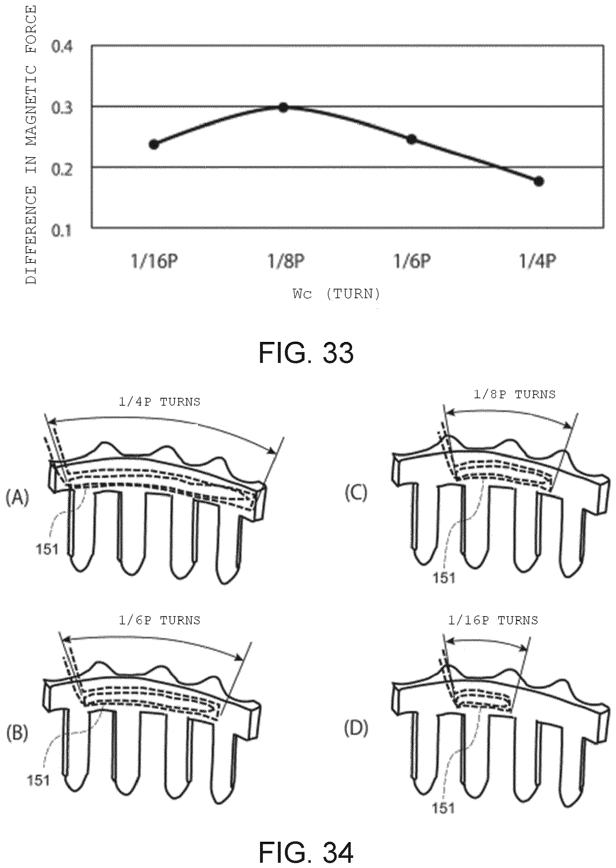

Fig. 33 is a graph illustrating the relationship between the size of the search coil and the difference in magnetic force in the example illustrated in Fig. 29.

In the graph of Fig. 33, the vertical axis represents the difference in magnetic force obtained by measurement with the search coil 151, and the horizontal axis represents the size of the search coil 151. As the size of the search coil in the example illustrated in Fig. 29, specifically, the spread Wc in the circumferential direction is used, and is indicated by using one turn in the circumferential direction as a unit.

Fig. 34 is a diagram illustrating the search coil 151 having different spreads Wc.

Fig. 34 illustrates an example (A) in which the spread Wc of the search coil 151 is 1/4P turns (where P = the number of poles), an example (B) in which the spread Wc is 1/6P turns, an example (C) in which the spread Wc is 1/8P turns, and an example (D) in which the spread Wc is 1/16P turns.

The graph of Fig. 33 illustrates the difference in magnetic force obtained by measurement for the search coil 151 having the spread Wc of each example illustrated in Fig. 34.

When the spread Wc of the search coil 151 is 1/16P turns, the difference in magnetic force exceeding 0.2 is obtained, and detection with sufficient accuracy is possible. However, when the spread Wc of the search coil 151 is smaller than 1/16P turns, the detection area in the search coil 151 is steeply reduced, and the detection accuracy becomes insufficient.

When the spread Wc of the search coil 151 is 1/8P turns, the difference in magnetic force obtained is 0.3, which is the maximum. In addition, when the spread Wc of the search coil 151 is 1/4P turns, the difference in magnetic force obtained is 0.18, and detection with sufficient accuracy is possible. However, when the spread Wc of the search coil 151 is larger than 1/4P turns, the difference in magnetic force becomes small, and the detection accuracy becomes insufficient.

Therefore, it can be seen that the spread Wc of the search coil 151 is desirably 1/16P turns or more and 1/4P turns or less.

In the present embodiment, a so-called inner rotor type motor is used as a diagnosis target. However, since the inner rotor type is generally used at a higher rotation speed than the outer rotor type, the processing of analyzing the frequency of the fc signal is easy. In addition, since the inner rotor type generally has a short distance from the air gap between the rotor and the stator to the bearing, eccentricity due to bearing wear easily affects the air gap, and diagnosis of bearing wear by the detection of a leakage magnetic field is easier than that of the outer rotor type.

In the present embodiment, the rolling bearing is used as the bearing 140, but the rolling bearing is more suitable than a slide bearing for wear diagnosis by eccentricity detection of the rotation shaft 112.

The present invention can be widely applied to, for example, motors used for home appliances, automobiles, ships, aircrafts, trains, and the like. In addition, the present invention can be widely applied to, for example, generators used for automobiles, power-assisted bicycles, wind power generation, and the like.

It is to be considered that the embodiments described above are illustrative in all aspects, and are not restrictive. The scope of the present invention is shown not by the above-described embodiment but by the scope of the claims, and is intended to include all changes within the meaning and scope equivalent to the scope of claims.

### Reference Signs List

- 100: motor
- 110: rotor
- 111: rotor core
- 112: rotation shaft
- 120: stator
- 130: outer frame
- 121: stator core
- 122: winding
- 123: ring portion
- 124: tooth portion
- 125: groove portion
- 126: jumper wire
- 140: bearing
- 141: outer ring
- 142: roller member
- 150: Hall sensor
- 151: search coil
- 152: film
- 153: conductive wire
- 155: search coil group
- 160: comb-shaped member
- 161: wedge portion
- 162: connecting portion
- 200: diagnostic system
- 210: detection unit
- 211: sensor group
- 212: amplifier circuit
- 213: A/D converter
- 215: spectrum analyzer
- 220: diagnosis device
- 221: data acquisition unit
- 222: data recording unit
- 223: analysis unit
- 224: evaluation unit
- 225: primary determination unit
- 226: wear amount conversion unit
- 227: comprehensive determination unit

## Claims

1. A rotary electric machine comprising:
a bearing that holds a rotation shaft and is capable of rotating the rotation shaft;
a housing in which the bearing is incorporated;
a rotor that is fixed to the rotation shaft and rotates; and
a stator that is fixed to the housing,
wherein the stator includes:
a stator core having a tooth portion protruding toward the rotor and extending along the rotation shaft;
a winding wound around the stator core; and
a plurality of magnetic detection elements attached to an end portion of the stator core in an axial direction in which the rotation shaft extends while being separated from each other in a rotation direction of the rotation shaft.

2. The rotary electric machine according to claim 1, wherein two of the plurality of magnetic detection elements are attached at positions facing each other with a center of the stator core interposed therebetween.

3. The rotary electric machine according to claim 2, comprising:
at least three magnetic detection elements including two magnetic detection elements attached at the facing positions.

4. The rotary electric machine according to any one of claims 1 to 3, wherein at least one of the magnetic detection elements is attached at a position where a magnetic field is stronger than that of other positions in an entire circumference of the stator core.

5. The rotary electric machine according to claim 4, wherein at least one of the magnetic detection elements is attached at a position where the magnetic field is stronger than that of other positions in the entire circumference of the stator core, and another at least one of the magnetic detection elements is attached at a position where the magnetic field is weaker than that of other positions in the entire circumference of the stator core.

6. The rotary electric machine according to any one of claims 1 to 5, wherein the plurality of magnetic detection elements are search coils having a wound conductive wire.

7. The rotary electric machine according to claim 6, wherein the search coil extends from an end of the stator core toward a center of the stator core in the axial direction, and a length of the search coil in the axial direction is 1/10 or more and 1/2 or less of a length of the stator core in the axial direction.

8. The rotary electric machine according to claim 6, wherein the search coil spreads along a circumferential direction of an inner peripheral surface of the stator core, and a length of the search coil in the circumferential direction ranges from 1/16P (where P = the number of poles) or more and 1/4P or less.

9. The rotary electric machine according to any one of claims 6 to 8, wherein the search coil extends along the axial direction and spreads along the circumferential direction.

10. The rotary electric machine according to claim 6 or 7, comprising:
a wedge member inserted into a gap between the tooth portions,
wherein the search coil is incorporated in the wedge member.

11. The rotary electric machine according to claim 6 or 8, comprising:
a plurality of wedge members each of which is inserted into a gap between the tooth portions and is connected to each other,
wherein the search coil is incorporated in a connecting portion where the plurality of wedge members are connected.

12. The rotary electric machine according to claim 9, comprising:
a plurality of wedge members each of which is inserted into a gap between the tooth portions and is connected to each other,
wherein the search coil is incorporated in both each of the plurality of wedge members and a connecting portion where the plurality of wedge members are connected.

13. The rotary electric machine according to any one of claims 10 to 12, wherein a resin is used as a material for the wedge member.

14. The rotary electric machine according to any one of claims 1 to 13, wherein the stator surrounds the rotor.

15. The rotary electric machine according to any one of claims 1 to 14, wherein the bearing is a rolling bearing.

16. The rotary electric machine according to any one of claims 1 to 15, wherein
the bearing is provided on each of both sides of the rotation shaft with the rotor interposed therebetween, and
the plurality of magnetic detection elements are attached to both ends of the stator core in a direction in which the rotation shaft extends.

17. A diagnosis device comprising:
a signal acquisition unit that acquires a magnetic signal obtained by each of a plurality of magnetic detection elements attached to an end of a stator core included in a rotary electric machine in a direction in which a rotation shaft of the rotary electric machine extends while being separated from each other in a rotation direction of the rotation shaft; and
a first diagnosis unit that diagnoses eccentricity in the rotation shaft by comparing magnetic field intensities indicated by the magnetic signals acquired by the signal acquisition unit.

18. The diagnosis device according to claim 17, wherein
two of the plurality of magnetic detection elements are attached at positions facing each other with the center of the stator core interposed therebetween, and
the first diagnosis unit diagnoses eccentricity in the rotation shaft based on a difference between magnetic field intensities indicated by magnetic signals obtained by two magnetic detection elements attached at the facing positions.

19. The diagnosis device according to claim 17 or 18, further comprising:
a second diagnosis unit that diagnoses a creep phenomenon of a bearing holding the rotation shaft by analyzing a frequency component in a magnetic field intensity indicated by the magnetic signal.

20. The diagnosis device according to claim 19, further comprising:
at least three magnetic detection elements including two magnetic detection elements attached at positions facing each other with a center of the stator core interposed therebetween as the plurality of magnetic detection elements, and
a third diagnosis unit that diagnoses authenticity of the creep phenomenon by a phase difference between low-frequency components included in the respective magnetic signals obtained by the three magnetic detection elements.
